# EUROPEAN PATENT APPLICATION

(11) **EP 2 618 275 A1**
(43) Date of publication of application: **24.07.2013**
(21) Application number: 12194308.8
(22) Date of filing: 26.11.2012
(51) Int. Cl.: G06F 17/30, G06F 7/24

(54) **A method of querying a data structure**

(30) Priority: 20.01.2012 GB 201200947
(71) Applicant: Data-Re Limited, Milton Keynes Buckinghamshire MK1 1BA (GB)
(72) Inventor: Longshaw, Thomas, Benjamin, Worcester, Worcestershire WR3 8JQ (GB)
(74) Representative: Ashton, Gareth Mark

(57) **Abstract**

There is provided a method of querying a data structure (100), the data structure comprising a plurality of records (T1 - T7) and a plurality of data items (R, G, B, Y, O), each record comprising an index identifying the record and a collection of paths (P1 - P5) pointing to a selection of the data items. Each path of a record corresponds to a respective data variable, the value of the data variable being the data item pointed to by the path. The method comprises receiving (200) a query to sort a sub-set of the records according to a data variable; creating (210) a first array; defining (220) start points in the first array for respective data items of the first data variable according to the order in which the data items are to be sorted; for each record of the sub-set, storing (230) the index of the record after the start point corresponding to the data item of the first data variable of the record; determining (240) an end point for each start point; determining (250) which locations in each sequence of locations within the first array where indexes to the records have been stored based on the start points and the end points; and returning (250) the determined locations to designate where the record indexes corresponding to the respective data items may be found.

## Description

The present invention relates to a method of querying a data structure, and in particular to querying a specific type of data structure in which data records hold pointers to data, rather than the data itself.

Data structures having data records that hold pointers to data, rather than the data itself, are known in the art. The use of records that hold pointers to data, means that multiple records can hold pointers to the same piece of data stored in memory. Therefore the piece of data only needs to be stored once, reducing the amount of storage space required and the time required to run data queries.

The larger the data structure becomes, the greater the advantages of exploiting the redundancy in the data by storing pointers to data instead of multiple instances of the data. For data structures having greater than 10⁷ records, the advantages can be considerable.

One method of using records that store pointers to data is described in US Patent No. 7,194,456, wherein the pointers are used to navigate through a tree structure to the required data item. However other methods of using pointers to access to data items are also possible, for example a method where each "node" of the tree has more than two branches, or where the pointers directly point to data items rather than going via nodes.

US Patent No. 7,895,216 describes a method for sorting a sub-set of data according to a selection criteria, a sort pattern, and a sort order. A step of this method comprises removing un-allocated space from a sorted list of pointers, however identification of whether a particular location holds a pointer, or just un-allocated space, typically requires a comparison between a reference value and the value in the location. The number of records stored in present-day data structures can be greater than 10⁹, and so comparing each one of these records to a reference value can take a long time to execute.

It is therefore an aim of the invention to improve upon known data structure querying methods.

According to a first aspect of the invention, there is provided a method of querying a data structure. The data structure comprises a plurality of records and a plurality of data items, each record comprising an index identifying the record and a collection of paths pointing to a selection of the data items. Each path of a record corresponds to a respective data variable, the value of the data variable being the data item pointed to by the path, and at least one data item being pointed to by paths of at least two different records. The data variables comprise at least a first data variable, and the data structure further comprises a plurality of counts associated with the first data variable, each count corresponding to one of the data items and designating how many of the paths of the first data variable point to that data item. The method comprises:
- receiving a query to sort a sub-set of the records according to the first data variable;
- creating a first array comprising a plurality of locations for storing respective indexes of records;
- defining start points for respective data items of the first data variable, each start point designating the start of a respective sequence of locations within the first array, the number of locations in the sequence being at least as large as the count of the respective data item; wherein the sequences of locations are ordered within the first array according to the order in which the data items of the first data variable are to be sorted;
- for each record of the sub-set, storing the index of the record in the first available location in the sequence of locations corresponding to the start point for the data item that is pointed to by the path corresponding to the first data variable;
- determining an end point for each respective sequence of locations, each end point designating the last location in the respective sequence of locations where an index of a record has been stored;
- determining which locations in each sequence of locations within the first array where indexes to the records have been stored, based on the start point and the end point of each sequence of locations; and
- returning the determined locations of each sequence of locations to designate where the record indexes of each sequence of locations corresponding to the respective data item may be found.

Advantageously, the data structure and the method used to query the data structure means that start and end points within a sequence of locations can be defined and stored during the sorting of the data. Since the indexes are stored sequentially, all of the locations between the start and end points will be filled with indexes, and so the data in these locations can be accessed without having to test each location against a reference value to see if the location contains a valid index.

Furthermore, the indexes in the locations between the start and end points may be copied into a third array, such that the indexes directly follow one another in the same order as the order of the sequences of locations in the first array. Since the indexes directly follow one another, operations such as averaging operations may be performed for the data items of a data variable, without empty locations between the locations where the indexes are stored resulting in the sum of the data items being divided by a higher number of locations than are actually filled with data. Indexes that directly follow one another are considered to fill all the available locations between the location having the first index and the location having the last index, for example so that no empty locations are present between them, or so that there is no ambiguity over the number of valid indexes that will be present over a given range of locations. A further benefit of copying the indexes into a third array is that the size of the third array will be smaller than that of the first array, since a lower number of locations are required, according to the number of locations in the first array that are left empty.

The paths of the records may also be copied into the third array to speed the processing of subsequent related queries.

The data structure may comprise a storage array for storing the record indexes and the paths of each record. The records may be read by scanning through the storage array, and when a record falling within a required sub-set is found, the index of the record may be copied from the storage array to an appropriate location in the first array. The sub-set of records may for example be a random selection of records, or it may be the records that have certain data items for one of more of the data variables. As well as copying the index of the record into the first array, the paths of the record may also be copied into the first array. Then, the first array could be read directly, rather than having to get the indexes from the first array and then refer to the storage array to get the paths for the indexes.

Advantageously, the copying of the record index into the next available location in the sequence of locations that corresponds to the data item may be performed by copying from a second array that holds only the sub-set of records. The records that are required for the sub-set may therefore be determined and stored in the second array prior to the sorting. The separation of the sorting step from determining the sub-set may result in a more efficient processing process, and the indexes of the sub-set can remain stored in the second array for use in later queries, instead of having to re-calculate the sub-set.

As well as copying the index of the record into the second array, the paths of the record could also be copied into the second array. Then, the second array could be read directly, rather than having to get the indexes from the second array and then refer to the storage array to get the paths for the indexes.

The count of each data item of the first data variable is normally most efficiently determined at the time of entering the records into the data structure, and the counts stored in the data structure for use in subsequent queries. Counts may also be stored for the data items of other ones of the data variables besides the first data variable. Advantageously, the counts of each data item of the first data variable may be stored in order in the data structure. Then, the start point in the first array of each sequence of locations corresponding to a data item may be set according to the sum of the counts of the data items that precede that data item in the order. This way, each start point is known to leave a sufficient number of locations before it to hold all the record indexes that could possibly be put before it, e.g. if every single one of the records that could go before it happened to be in the sub-set of records. This method allocates memory space more efficiently than simply allocating far more space than is needed for each sequence of locations corresponding to a data item. Each start point may specify the first location in the respective sequence of locations, and may be defined as 1 location plus the sum of the counts of the data items that precede the data item associated with the start point in the order.

Each end point may be calculated by firstly setting a respective offset value to be equal to the start point that corresponds to the end point, secondly incrementing the respective offset value to point to the next location in the sequence of locations each time the storing the index of the record in the first available location in the sequence of locations is performed; and subsequently setting the end point according to the respective offset value. The use of an offset value provides a convenient method of specifying which location the next record index should be placed in, and provides a running total that may be used to set the end point after all of the sub-set of records have been copied into the first array. Typically, since the offset value of incremented by 1 location after each storage operation, the end point where the last record index is stored is the offset value minus 1 location.

A second aspect of the invention provides a computer system storing a data structure comprising a plurality of records and a plurality of data items, each record comprising an index identifying the record and a collection of paths pointing to a selection of the data items, wherein each path of a record corresponds to a respective data variable, the value of the data variable being the data item pointed to by the path, at least one data item being pointed to by paths of at least two different records, wherein the data variables comprise at least a first data variable, and wherein the data structure further comprises a plurality of counts associated with the first data variable, each count corresponding to one of the data items and designating how many of the paths of the first data variable point to that data item, wherein the computer system is configured to perform the method of the first aspect of the invention.

A third aspect of the invention provides a computer program product storing a program for carrying out the method of the first aspect of the invention. The computer program product may for example be stored on a storage media such as an optical disk, e.g. a DVD, or the computer program product may be stored within a signal that is sent to a computing system where the program is to be installed.

Embodiments of the invention will now be described with reference to the accompanying drawings, in which:

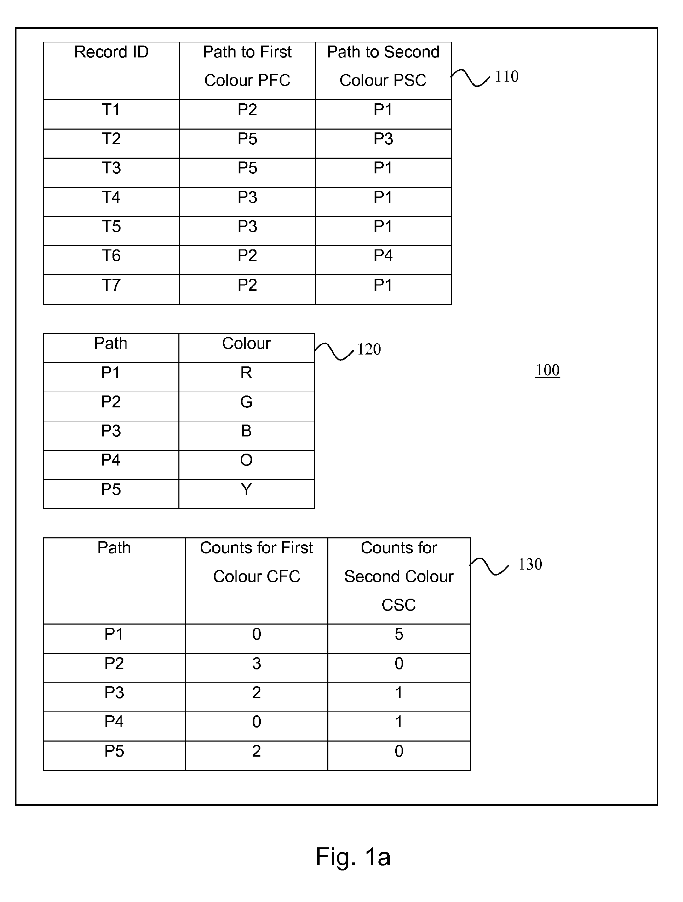

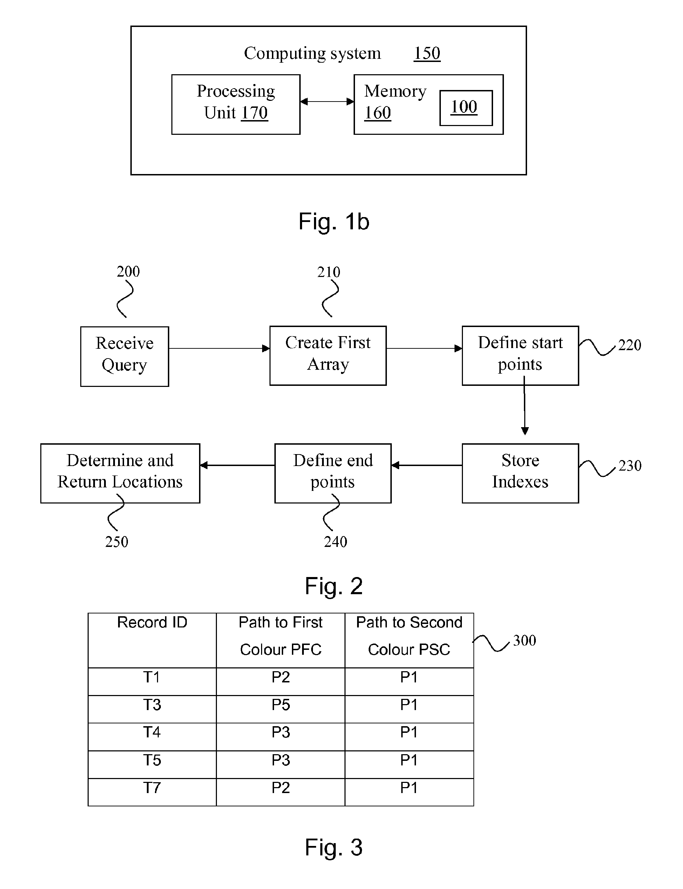

Fig. 1 a shows a diagram of a data structure with which some embodiments of the invention may be utilised;
Fig. 1 b shows a computer system storing the data structure of Fig. 1 a;
Fig. 2 shows a flow diagram of a method for querying a data structure according to an embodiment of the invention;
Fig. 3 shows a diagram of a second array holding a sub-set of the records in the data structure;
Fig. 4a shows a diagram of a first array into which records of the sub-set may be sorted;
Fig. 4b shows a diagram of the first array after records of the sub-set have been sorted into it;
Fig. 4c shows a flow diagram of the use of an offset value during the sorting of the records; and
Fig. 5 shows a diagram of a third array after gaps between the sorted records of the first array have been removed.

The diagram of Fig.1a shows a data structure 100 with which various embodiments of the invention may be implemented. The data structure comprises a plurality of records in a table 110 (storage array). In this embodiment, each record corresponds to a different type of product and indicates the colours in which the product should be painted.

In particular, each record has a unique index T1 - T7 and two data variables Path to First Colour (PFC) and Path to Second Colour (PSC), indicating which colours the product should be painted in. The values (colours) of the data variables for each record are pointed to by the paths P1 - P5. As shown in the table 120, the path P1 points to a data item R (Red), the path P2 points to a date item G (Green), the path P3 points to a date item B (Blue), the path P4 points to a data item O (Orange), and the path P5 points to a data item Y (Yellow). Thus instead of storing the colour Red on five different occasions within table 110, it is only stored once within table 120, thereby exploiting the redundancy in the data to reduce data storage requirements.

A further table 130 within the data structure 130 designates a plurality of count numbers CFC for the first data variable PFC and a plurality of count numbers CSC for the second data variable PSC. Each count number corresponds to one of the data items (paths) and designates how many of the paths each data variable point to that data item. For example, table 110 shows that there are three paths P2 for the first colour PFC, and so the number 3 appears in the part of the table 130 corresponding to P2 and the counts for the first colour CFC.

The table 130 is typically created at the time of entering records into the table 110. For example, if an additional record is added into the data structure then the count number for the path that points to the first colour of the record is incremented, and the count number for the path that points to the second colour of the record is incremented. If a colour of the record does not have a known path, then a new path (e.g. P6) for that colour is stored as a new line in table 120, and a new line is stored in table 130 for that path.

Fig. 1 b shows the data structure 100 being stored in a memory 160 of a computer system 150. Preferably, the memory 160 is a random access memory so that the data in the data structure can be easily accessed. A processing unit 170 is connected to the memory for querying the data in the data structure, and is programmed to run certain types of data queries on the data structure when required.

A method for querying the data structure 100 according to an embodiment of the invention will now be described with reference to Figs. 2 - 5. Referring to Fig. 2, in a first step 200 a query is received at the processing unit 170 to sort a sub-set of the records T1 - T7 according to the first colour of the record. The sub-set may be purposefully randomly chosen from the records T1 - T7, or it may already be stored somewhere ready for sorting. In this particular embodiment, the sub-set of records is chosen to be all the records that have a second colour of Red, i.e. the records with a path P1 stored as the second data variable PSC, and the records are stored in an array 300 shown in Fig. 3. The array 300 stores both the record indexes and the paths of the records, although alternatively just the record indexes could be stored.

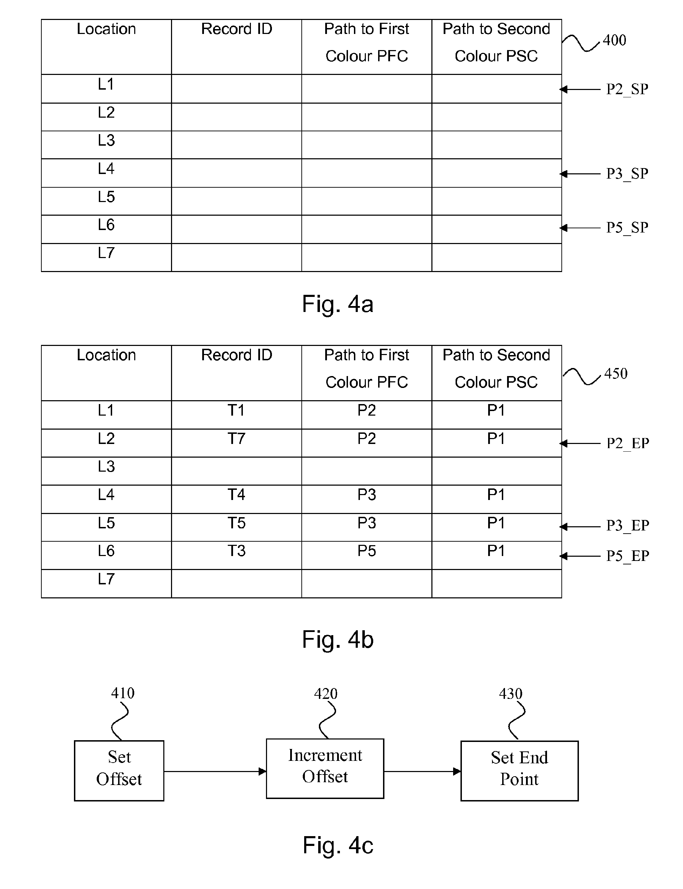

In response to the query, in a step 210 the processing unit 170 creates an empty array 400 (see Fig. 4a) comprising a plurality of locations L1 - L7 for storing indexes to records. In this embodiment each location is large enough to also store the paths of the data variables of each record, although each location may alternatively just store a record index.

The method next defines start points within the array 400 at a step 220, each start point designating the start of a number of sequential locations within the array. Each sequence of locations corresponds to a particular data item (colour) of the first data variable (first colour), and has at least as many locations as the count number associated with that data item of the first data variable. Preferably, the number of locations in each sequence of locations is set according to the relevant count number. The order of the sequences of locations is arranged in the same order as the data is to be sorted into. In this embodiment, the count values are arranged in the table 130 in the same order as the data items corresponding to the count values are to be sorted into, and the start point of the sequence of locations for each data item is set as 1 location plus the sum of the counts of the data items that precede that data item in the order.

For example, table 130 in the column for the first data variable CFC shows that there are no paths P1 so that no sequence of locations is required for colour R, that there are three paths P2 so that a sequence of locations at least three locations long is required for colour G, that there are two paths P3 so that a sequence of locations at least two locations long is required for colour B, that there are no paths P4 so that no sequence of locations is required for colour O, that there are two paths P5 so that a sequence of locations at least two locations long is required for colour Y. Accordingly, as shown in Fig. 4a, the start point P2_SP for the sequence of locations corresponding to the colour G is set as 1 location plus zero = L1, the start point P3_SP for the sequence of locations corresponding to the colour B is set as 1 location plus 3 plus 0 = L4, and the start point P5_SP for the sequence of locations corresponding to the colour Y is set as 1 location plus 0 plus 3 plus 2 plus 0 = L6. Each sequence of locations now contains a sufficient number of locations to hold all the records of the data structure that have the colour corresponding to that sequence of locations.

Since the records to be sorted are actually a sub-set of the records in the data structure 100, not all of the locations in the sequences of locations will be filled by sorted records, and empty location(s) will remain after the sorting. The sorting of the sub-set will now be described with reference to Fig. 3 and Fig. 4b.

The sub-set of records shown in the table 300 of Fig. 3 are sorted into the table 450 of Fig. 4b one-by-one until every record in the table 300 has been sorted. Each record is checked for the path of its first data variable (first colour) and then copied into the first available location in the sequence of locations that corresponds to that path (colour). For example, record T1 in table 300 has a path P2, and so it is copied into the first available location in the sequence of locations corresponding to the start point P2_SP in table 450, which is location L1. The next record T3 in table 300 has a path P5, and so it is copied into the first available location in the sequence of locations corresponding to the start point P5_SP in table 450, which is location L6. The next record T4 in table 300 has a path P3, and so it is copied into the first available location in the sequence of locations corresponding to the start point P3_SP in table 450, which is location L4. The next record T5 in table 300 also has a path P3, and so it is copied into the first available location in the sequence of locations corresponding to the start point P3_SP in table 450, which is location L5. The last record T7 in table 300 has a path P2, and so it is copied into the first available location in the sequence of locations corresponding to the start point P2_SP in table 450, which is location L2.

Now that all the records of the sub-set in table 300 have been sorted into the table 450, the end points P2_EP, P3_EP, and P5_EP are determined. As can be seen from table 450, the end points designate the last location that has a record stored in it for each respective sequence of locations. The end points are preferably calculated by maintaining a running total (offset) for each sequence of locations, each offset first being set at the start point location for the sequence of locations, and being incremented by 1 location each time another record is sorted into that sequence of locations. Then, at the end of the sorting the offsets are used to determine the end points, such as by subtracting 1 location from each of the offsets to give the corresponding end point. The offset value may also be used to indicate the first available location in the sequence of locations during the sorting, since it always points to the next empty location in the sequence.

For example, the end point corresponding to the start point P2_SP may be calculated as follows: Firstly, before sorting begins, an offset value is set 410 equal to the start point P2_EP so that the offset has a value of L1; Secondly, the record T1 is copied into the first available location L1 in the sequence of locations corresponding to start point P2_EP, and so the offset is incremented 420 by 1 location to L2; Thirdly, the record T7 is copied into the first available location L2 in the sequence of locations corresponding to start point P2_EP, and so the offset is incremented 420 by 1 location to L3; Finally, after the sorting is completed, the end point P2_EP corresponding to the start point P2_SP is set 430 as the offset value L3 minus 1 location = L2.

It can be seen that no record has been copied into location L3, because the record T6 that would have been copied into the sequence of locations corresponding to P2_SP did not form part of the sub-set in the table 300, and no record has been copied into location L7, because the record T2 that would have been copied into the sequence of locations corresponding to P5_SP also did not form part of the sub-set in the table 300. Although each location of the table 450 could be scanned again by comparing the values in each location to a reference value to determine whether the location was filled with a record or not, a more computationally efficient method according to an embodiment of the invention determines the locations of each sequence of locations where records have been stored based upon the previously stored start points and the end points. For example, the valid range of locations for the sequence of locations corresponding to the start point P2_SP and end point P2_EP is P2_SP -> P2_EP, i.e. L1 -> L2. The valid ranges for the other sequences of locations are calculated in the same way, giving a valid range of L4 -> L5 corresponding to the start point P3_SP and L6 -> L6 corresponding to the start point P5_SP.

The determined locations designating the valid ranges of the table 450 where records are stored are returned, and may be used to access or search or perform operations upon the sorted data. Each range of locations is known to relate to a group of data all having the same path for the first colour PFC, and therefore the same colour. Thus an operation could easily be performed on all the records of the sub-set having a PFC corresponding to a particular colour by looking at the range of determined locations for the sequence of locations corresponding to that colour. Preferably, the ranges of determined locations are arranged in the same order as the sequence of locations to maintain the sorted order, although alternately each range of determined locations may be associated with a indicator that indicates the path to the first colour PFC with which the range is associated.

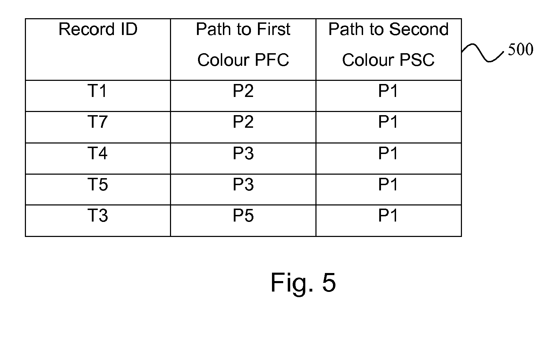

The determined locations may be returned as a file, or simply returned to a subsequent part of a program running on the processing unit 170 for performing further operations. The determined locations may for example be returned by returning the ranges of where the determined locations are. The indexes in the determined locations may be read from the determined locations and returned as a file or otherwise after the returning of the determined locations. The further operations may comprise running further queries on the records, either immediately, or after removing the gaps in the records to produce a table 500 (see Fig. 5). The table 500 may be returned as a file containing an array with the table 500.

The table 500 is created by copying the records that are in the determined locations of each sequence of locations into the table, such that the indexes directly follow one another in the same order as the order of the sequences of locations in the table 450. For example, firstly the records in the determined locations corresponding to P2_SP are copied into the table 500, then the records in the determined locations corresponding to P3_SP, and finally the records in the determined locations corresponding to P5_SP.

In the illustrated embodiments the tables 300, 400, 450, and 500 store both record indexes and record paths, although in alternate embodiments only the record indexes may be stored in one or more of the tables, and each record's paths may be determined by looking them up in the table 110 based upon the record's index.

In the above-described embodiment, the records forming the sub-set are taken from the table 300, although in alternative embodiments the table 300 may not be implemented and the records forming the sub-set may be taken directly from the table 110 based upon whether each record is determined to be part of the sub-set or not.

Each record may comprise further data variables beyond the two data variables PFC and PSC of the illustrated embodiments, or may only comprise a single data variable. The data variables may be other types of variables than colours. The count values may be present in the data structure for just the data variable by which the data is to be sorted, or for further ones of the data variables as well.

## Claims

1. A method of querying a data structure (100), the data structure comprising a plurality of records (T1 - T7) and a plurality of data items (R, G, B, Y, O), each record (T1 - T7) comprising an index identifying the record and a collection of paths (P1 - P5) pointing to a selection of the data items (R, G, B, Y, O), wherein each path of a record corresponds to a respective data variable (PFC, PSC), the value of the data variable being the data item pointed to by the path, at least one data item (R, G, B, Y, O) being pointed to by paths (P1 - P5) of at least two different records (T1 - T7), wherein the data variables comprise at least a first data variable (PFC), and wherein the data structure further comprises a plurality of counts (CFC, CSC) associated with the first data variable, each count corresponding to one of the data items and designating how many of the paths of the first data variable point to that data item, and wherein the method comprises:
- receiving (200) a query to sort a sub-set of the records (T1, T3, T4, T5, T7) according to the first data variable (PFC);
- creating (210) a first array (400) comprising a plurality of locations (L1 - L7) for storing respective indexes of records;
- defining (220) start points (P2_SP, P3_SP, P5_SP) for respective data items of the first data variable, each start point designating the start of a respective sequence of locations within the first array, the number of locations in the sequence being at least as large as the count (CFC) of the respective data item; wherein the sequences of locations are ordered within the first array according to the order in which the data items of the first data variable (PFC) are to be sorted;
- for each record of the sub-set, storing (230) the index of the record in the first available location in the sequence of locations corresponding to the start point for the data item that is pointed to by the path corresponding to the first data variable (PFC);
- determining (240) an end point (P2_EP, P3_EP, P5_EP) for each respective sequence of locations, each end point designating the last location in the respective sequence of locations where an index of a record has been stored;
- determining (250) which locations in each sequence of locations within the first array where indexes to the records have been stored, based on the start point and the end point of each sequence of locations; and
- returning (250) the determined locations of each sequence of locations to designate where the record indexes of each sequence of locations corresponding to the respective data item may be found.

2. The method of claim 1, wherein the data structure comprises a storage array (110) for storing the record indexes (T1 - T7) and the paths (P1 - P5) of each record, and wherein the storing the index of the record in the first available location in the sequence of locations comprises copying the index from the storage array (110).

3. The method of claim 1 or 2, wherein each location in the first array (400, 450) is for storing both an index of a record and the paths of the record, and wherein the storing (230) the index of the record in the first available location in the sequence of locations further comprises storing the paths of the record in that same location.

4. The method of any one of claims 1 to 3, further comprising returning (250) the indexes that are stored in the determined locations, the indexes arranged in the order of the sequences of locations.

5. The method of claim 4, wherein the returning the indexes comprises copying the indexes that are in the determined locations (L1, L2, L4, L5, L6) of each sequence of locations into a third array (500), such that the indexes directly follow one another in the same order as the order of the sequences of locations in the first array (450), and returning the third array.

6. The method of any one of claims 1 to 5, wherein the plurality of counts (CFC) in the data structure are ordered in the same order in which the data items (R, G, B, Y, O) corresponding to those counts are to be sorted, and wherein the start point of each data item is set (220) according to the sum of the counts of the data items that precede that data item in the order.

7. The method of claim 6, wherein each start point (P2_SP, P3_SP, P5_SP) specifies the first location in the respective sequence of locations, and wherein the start point of each data item is 1 location plus the sum of the counts of the data items that precede that data item in the order.

8. The method of any one of claims 1 to 7, wherein each end point (P2_EP, P3_EP, P5_EP) is calculated (240) by:
- firstly setting (410) a respective offset value to be equal to the start point that corresponds to the end point,
- secondly incrementing (420) the respective offset value to point to the next location in the sequence of locations each time the storing the index of the record in the first available location in the sequence of locations is performed; and
- subsequently setting (430) the end point according to the respective offset value.

9. The method of claim 8, wherein the first available location in the sequence of locations is determined according to the respective offset value.

10. The method of claim 8 when appended to claim 7, wherein each end point (P2_EP, P3_EP, P5_EP) specifies a location within each respective sequence of locations, and wherein the calculation of each end point further comprises subtracting 1 location.

11. The method of claim 10, wherein each respective offset value specifies a location within the respective sequence of locations, and wherein the first available location in the sequence of locations is determined as the location specified by the offset value.

12. The method of any preceding claim, wherein the sub-set of records is a random selection of records, or wherein the sub-set of records is determined according to the data items of the records.

13. The method of claim 12, further comprising copying the index of the record into a second array (300) if the record is part of the sub-set, and wherein the storing (230) the index of the record in the first available location in the sequence of locations comprises copying the index from the second array (300).

14. A computer system (150) storing a data structure (100) comprising a plurality of records (T1 - T7) and a plurality of data items (R, G, B, Y, O), each record comprising an index identifying the record and a collection of paths (P1 - P5) pointing to a selection of the data items, wherein each path of a record corresponds to a respective data variable (PFC, PSC), the value of the data variable being the data item pointed to by the path, at least one data item being pointed to by paths of at least two different records, wherein the data variables comprise at least a first data variable (PFC), and wherein the data structure further comprises a plurality of counts (CFC, CSC) associated with the first data variable, each count corresponding to one of the data items and designating how many of the paths of the first data variable point to that data item, wherein the computer system (150) is configured to perform the method of any preceding claim.

15. A computer program product storing a program for carrying out the method of any one of claims 1 to 13.
